# EUROPEAN PATENT SPECIFICATION

(11) **EP 2 807 960 B1**
(45) Date of publication and mention of the grant of the patent: **09.08.2017**
(21) Application number: 12879066.4
(22) Date of filing: 14.12.2012
(51) Int. Cl.: A47J 27/00

(54) **COOKING POT HAVING ROTATING AND ROLLING BASKET**
KOCHTOPF MIT EINEM ROTIERENDEN UND ROLLENDEN KORB
MARMITE DE CUISSON COMPORTANT UN PANIER TOURNANT ET ROULANT

(30) Priority: 11.06.2012 CN 201220272931 U
(43) Date of publication of application: 03.12.2014
(73) Proprietor: Chen, Zejv, Foshan, Guangdong 528329 (CN)
(72) Inventor: Chen, Zejv, Foshan, Guangdong 528329 (CN)
(74) Representative: Hellmich, Wolfgang
(86) International application number: PCT/CN2012/086683
(87) International publication number: WO 2013/185457

(56) References cited:
- CN-A- 1 426 720
- CN-A- 101 119 664
- CN-Y- 201 019 495
- CN-Y- 201 230 816
- DE-U1-202011 004 875
- US-A- 4 421 018
- US-A- 5 134 927
- US-A- 5 182 981
- US-A- 5 466 912

## Description

### FIELD OF THE INVENTION

The present invention relates to a cooking pot capable of automatically roasting food, in particular to an intelligent cooking pot having a rotating and rolling basket so as to uniformly turn over and roast food.

### BACKGROUND OF THE INVENTION

A variety of cooking pots and pans are the most commonly used basic kitchen utensils. At present, there are a variety of pots and pans used for cooking food. In order to make the most delicious food within the minimum time, people have developed various cooking pots and pans currently. The objective is all to make the taste of food better while saving more time. At present, many cooking pots adopt automatic rotary pot bodies to achieve the stirring function, so that the cooking pots can stir food while heating and cooking. Therefore, not only food and seasoning matters can be uniformly mixed but also the food can be adequately cooked and be more tasty. Currently, various common automatic cooking pots are generally that: pot bodies are horizontally placed and rotated along a vertical axial line; stirrers for stirring are disposed at the bottom of the pots; and food is stirred by the relative rotation of the stirrers and the pot bodies. In the process of cooking food by this means, although the cooked food can be fully stirred and mixed with seasoning matters, the food can be easily crushed or pulped by the stirrers, and hence there will be more food scraps. Moreover, when the horizontally rotated pot bodies are used for roasting food (e.g., a whole chicken), if no manual turnover is performed on the food, the case of incomplete roasting will certainly occur, and hence the taste of the food while eaten will be affected. Therefore, in order to overcome the above defect, the present invention provides a cooking pot capable of not only guaranteeing the completeness of the cooked food but also achieving uniform roasting, so as to compensate for the insufficiencies and regrets brought by cooking pots adopting the current conventional cooking means. A cooking pot is known from US5134927.

### SUMMARY OF THE INVENTION

The technical objective of the present invention is to provide a cooking pot having a rotating and rolling basket, which not only guarantees that food is adequately tasty but also guaranteeing that the cooked food is complete so as to enhance the taste.

In order to achieve the objective, the cooking pot having the rotating and rolling basket, provided by the present invention, comprises:
a pot body, including:
   a pot body housing, in which the pot body housing is provided with a main accommodating space; the main accommodating space is convexly extended towards one side and provided with an auxiliary accommodating space; and top edges on both sides of the pot body housing are respectively provided with a corresponding recess;
   a pot body base, in which the pot body base is a pot body structure capable of being sleeved into the main accommodating space; the top of the pot body base is extended outwards and provided with a horizontal flange capable of covering a top edge of the main accommodating space; the horizontal flange is further horizontally and convexly extended outwards and provided with a horizontal extension capable of covering the auxiliary accommodating space; the horizontal flange is also provided with two positioning stands capable of being sleeved into the recesses; and the top of each positioning stand is respectively provided with an elongated recess; and
   a lining pot body, in which the lining pot body is capable of being sleeved into the pot body base; and a top edge of the lining pot body is provided with handles which are respectively bridged into the elongated recess and extended outwards; and
   a pot cover configured to cover the pot body, including:
      an outer cover, in which the outer cover is a round convex structure provided with an recessed space at the bottom, and is extended outwards and provided with a turnover arm capable of being pivoted on the horizontal extension of the pot body base;
      a heat-insulating inner cover, in which the heat-insulating inner cover is an inverted pan structure provided with an opening on the top; and a bottom edge of the heat-insulating inner cover is provided with a horizontal flange capable of being fixed at a position close to the bottom edge on the inside of the outer cover;
      a heating apparatus, in which the heating apparatus is a circular heating source disposed at the bottom of the opening; and
      a fan apparatus, in which the fan apparatus includes a fan drive unit disposed at a position close to the top of the recessed space; a first cooling fan which is driven by the fan drive unit and blows up is disposed above the fan drive unit; and a second cooling fan which is coaxially driven and configured to cool the fan drive unit and a hot-gas driven fan which blows down the circular heating source are disposed below the fan drive unit;
      wherein a drive unit accommodated into the auxiliary accommodating space is disposed at the bottom of the horizontal extension and provided with a drive shaft which horizontally runs through a side wall of the pot body base; an end portion of the drive shaft is provided with an axially recessed nesting hole; a side wall of the lining pot body is provided with a through hole corresponding to an outer end of the drive shaft; and a rotating support extended towards the center of the lining pot body is disposed on a side wall facing the through hole.

In the cooking pot having the rotating and rolling basket, provided by the present invention, the cooking pot further comprises the rotating and rolling basket; a linkage rod axially extended outwards is respectively disposed on the center at two axial ends of the rotating and rolling basket; and an end portion of one linkage rod may be inserted into the nesting hole of the drive shaft, and an end portion of the other linkage rod is bridged on the rotating support, so that the rotating and rolling basket can be driven to rotate by the drive unit.

In the cooking pot having the rotating and rolling basket, provided by the present invention, the rotating and rolling basket is a cylindrical structure.

In the cooking pot having the rotating and rolling basket, provided by the present invention, the rotating and rolling basket is a long rectangular columnar structure.

In the cooking pot having the rotating and rolling basket, provided by the present invention, an outer wall of the rotating and rolling basket is a screen.

In the cooking pot having the rotating and rolling basket, provided by the present invention, the outer wall of the rotating and rolling basket is formed by a plurality of equally spaced strip rods.

In the cooking pot having the rotating and rolling basket, provided by the present invention, the rotating and rolling basket is an elongated rod of which one end may be inserted into the nesting hole of the drive shaft and the other end may be bridged on the rotating support; and the elongated rod is provided with a plurality of food retainers capable of moving on the elongated rod.

The cooking pot having the rotating and rolling basket, provided by the present invention, has the advantages that: as the cooking pot having the rotating and rolling basket, provided by the present invention, adopts the above technical proposal, food can be placed into the rotating and rolling basket or directly fixed on the elongated rod through the food retainers and hence rotated in the cooking pot while being heated and roasted. Therefore, not only the food can be cooked quickly but also the food can be uniformly heated so that the food can be fully and uniformly mixed with seasoning matters and the cooked food can be more tender. Moreover, the overall shape of the food cannot be damaged and good taste can be guaranteed as well.

Description will be given below with reference to the accompanying drawings for the convenience of the description of detailed contents and technology relevant to the present invention.

### BRIEF DESCRIPTION OF THE DRAWINGS

FIG. 1 is a schematic structural exploded view of a cooking pot having a rotating and rolling basket, provided by the present invention;
FIG. 2 is an internal schematic diagram of the cooking pot having the rotating and rolling basket, provided by the present invention;
FIG. 3 is a schematic structural view of a first embodiment of the rotating and rolling basket provided by the present invention;
FIG. 4 is a schematic structural view of a second embodiment of the rotating and rolling basket provided by the present invention;
FIG. 5 is a schematic structural view of a third embodiment of the rotating and rolling basket provided by the present invention; and
FIG. 6 is a schematic structural view of a fourth embodiment of the rotating and rolling basket provided by the present invention.

### DETAILED DESCRIPTION OF THE PREFERRED EMBODIMENTS

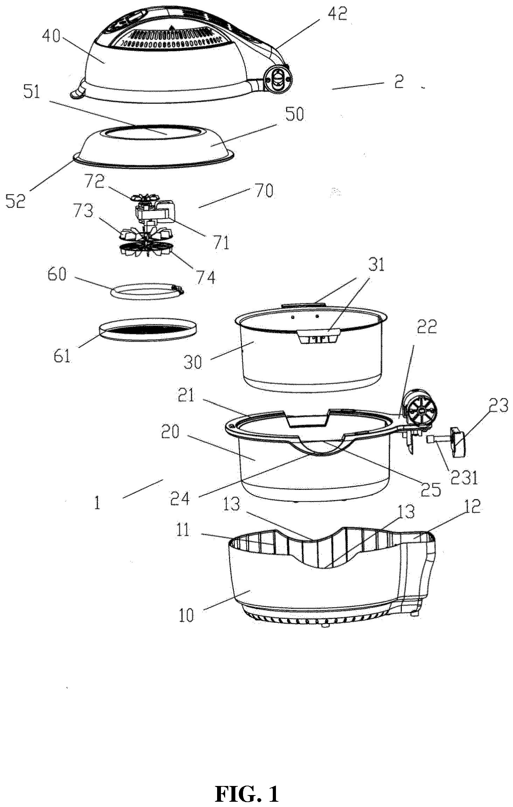

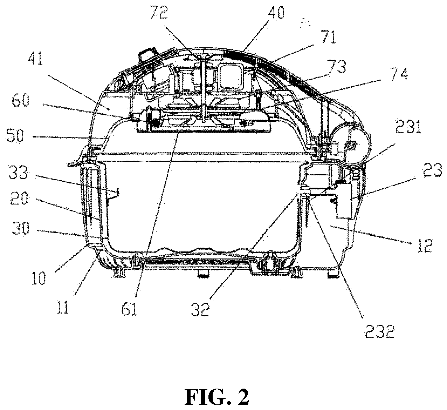

As illustrated in FIGS. 1 and 2, the cooking pot having the rotating and rolling basket, provided by the present invention, mainly comprises a pot body 1 and a pot cover 2. The pot body 1 includes a pot body housing 10, a pot body base 20 and a lining pot body 30, wherein the pot body housing 10 is provided with a main accommodating space 11 which is convexly extended towards one side and provided with an auxiliary accommodating space 12; top edges on both sides of the pot body housing 10 are respectively provided with a corresponding recess 13; the pot body base 20 is a pot body structure capable of being sleeved into the main accommodating space 11; the top of the pot body base 20 is extended outwards and provided with a horizontal flange 21 for covering a top edge of the main accommodating space 11; the horizontal flange 21 is further horizontally and convexly extended outwards and provided with a horizontal extension 22 for covering the auxiliary accommodating space 12; a drive unit 23 accommodated into the auxiliary accommodating space 22 is disposed at the bottom of the horizontal extension 22 and provided with a drive shaft 231 which horizontally runs through a side wall of the pot body base 20; an end portion of the drive shaft 231 is provided with an axially recessed nesting hole 232; the horizontal flange 21 is provided with two positioning stands 24 capable of being sleeved into the recesses 13; the top of each positioning stand 24 is provided with an elongated recess 25; the lining pot body 30 is sleeved into the pot body base 20; a top edge of the lining pot body 30 is provided with handles 31 capable of being bridged into the elongated recesses 25 respectively and extended outwards; a side wall of the lining pot body 30 is provided with a through hole 32 corresponding to an outer end of the drive shaft 231; and a rotating support 33 extended towards the center of the lining pot body 30 is disposed on a side wall facing the through hole 32.

The pot cover 2 is configured to cover the pot body 1. The pot cover 2 includes an outer cover 40, a heat-insulating inner cover 50, a heating apparatus 60 and a fan apparatus 70, wherein the outer cover 40 is a round convex structure provided with a recessed space 41 at the bottom and is extended outwards and provided with a turnover arm 42 capable of being pivoted on the horizontal extension 22 of the pot body base 20; the heat-insulating inner cover 50 is an inverted pan structure provided with an opening 51 on the top; a bottom edge of the heat-insulating inner cover 50 is provided with a horizontal flange 52 capable of being fixed at a position close to a bottom edge of the inside of the outer cover 40; the heating apparatus 60 is a circular heating source disposed at the bottom of the opening 51; the circular heating source may be a circular carbon tube; in addition, in order to protect the circular carbon tube, a cover plate 61 provided with a hollowed-out structure on a surface is disposed on the outside of the circular carbon tube; the fan apparatus 70 includes a fan drive unit 71 disposed at a position close to the top of the recessed space 41; a first cooling fan 72 which is driven by the fan drive unit 71 and blows up is disposed above the fan drive unit 71; and a second cooling fan 73 which is coaxially driven and configured to cool the fan drive unit 71 and a hot-gas driven fan 74 which blows down the circular heating source are disposed below the fan drive unit 71.

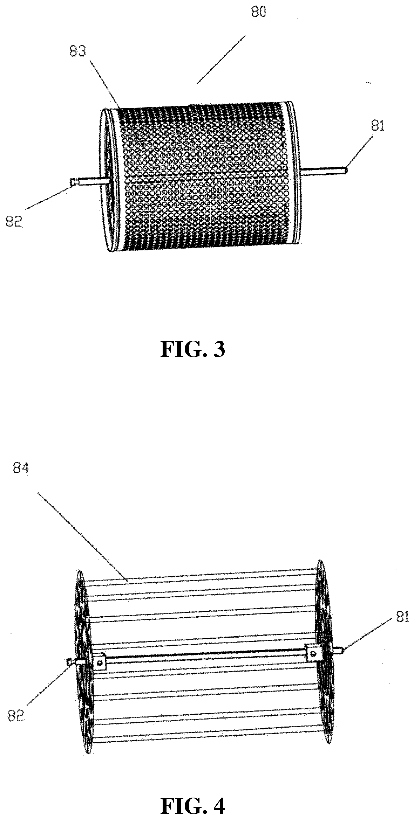

Moreover, as illustrated in FIG. 3, the cooking pot provided by the present invention further comprises a rotating and rolling basket 80 which is a cylindrical structure; and linkage rods 81 and 82 coaxially extended outwards are respectively disposed on the center at two axial ends of the rotating and rolling basket 80. An end portion of the linkage rod 81 may be inserted into the nesting hole 232 of the drive shaft 231 to form a linkage structure, and an end portion of the other linkage rod 82 is bridged on the rotating support 33. Therefore, when the drive unit 23 rotates, the rotating and rolling basket 80 can be driven by the drive shaft 231 to rotate synchronously. Moreover, an outer wall of the rotating and rolling basket 80 is formed by a screen 83. Of course, the outer wall may also be formed by a plurality of equally spaced strip rods 84, namely as illustrated in FIG. 4. Of course, the rotating and rolling basket 80 is additionally provided with a gate (not shown in the figure) for the feeding of food.

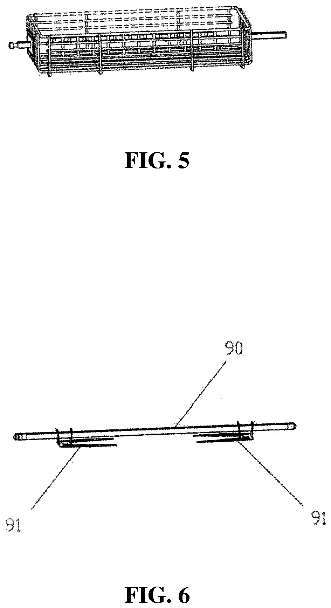

The rotating and rolling basket provided by the present invention may also be a long rectangular columnar structure, namely as illustrated in FIG. 5, the outer wall of the rotating and rolling basket is formed by the plurality of equally spaced strip rods. Of course, the outer wall may also be formed by a screen.

Moreover, the rotating and rolling basket provided by the present invention may also be formed by an elongated rod 90 of which one end may be inserted into the nesting hole 232 of the drive shaft 231 to form a linkage structure, and the other end may be bridged on the rotating support 33. The elongated rod 90 is provided with food retainers 91 capable of moving on the elongated rod 90, namely as illustrated in FIG. 6.

As the inside diameter of the pot body housing 10 is slightly greater than the outside diameter of the pot body base 20, there is a large gap between the pot body housing 10 and the pot body base 20. Moreover, large recessed space 41 is also formed between the outer cover 40 and the heat-insulating inner cover 50. Therefore, the cooking pot provided by the present invention has the function of preventing roasting heat from being directly transmitted to the outside.

In addition, as the first cooling fan 72 of the fan apparatus 70 may directly blow air to the outer cover 40 of the pot cover 2, the cooking pot provided by the present invention may have the function of further cooling the outer cover 40. Moreover, as the fan drive unit 71 may perform air cooling through the second cooling fan 73 disposed below the fan drive unit 71, the service life of the fan drive unit 71 can be greatly prolonged. Furthermore, as the hot-gas drive fan 74 blows down the circular heating source synchronously, heat required for roasting can be effectively transmitted to food to be roasted placed below, so as to achieve effective roasting.

When the food to be roasted is placed in the rotating and rolling basket 80, as the linkage rod 81 at one end of the rotating and rolling basket 80 and the drive shaft 231 are combined into the linkage structure, and the end portion of the linkage rod 82 at the other end of the rotating and rolling basket 80 is bridged on the rotating support 33, when the drive unit 23 operates, the rotating and rolling basket 80 can rotate synchronously, and hence the food to be roasted can achieve effective roasting.

The foregoing is only further detailed description given to the present invention with reference to the preferred embodiments. The specific implementation of the present invention should not be considered to be only limited to the description. A plurality of simple deductions or replacements may be still made by those skilled in the art without departing from the concept of the present invention and should all fall within the scope of protection of the present invention.

## Claims

1. A cooking pot, comprising:
a rotating and rolling basket (80);
a pot body, including:
a pot body housing (10), in which the pot body housing (10) is provided with a main accommodating space (11); the main accommodating space (11) is convexly extended towards one side and provided with an auxiliary accommodating space (12); and top edges on both sides of the pot body housing (10) are respectively provided with a corresponding recess (13);
a pot body base (20), in which the pot body base (20) is a pot body structure capable of being sleeved into the main accommodating space (11); the top of the pot body base (20) is extended outwards and provided with a horizontal flange (21) capable of covering a top edge of the main accommodating space (11); the horizontal flange (21) is further horizontally and convexly extended outwards and provided with a horizontal extension (22) capable of covering the auxiliary accommodating space (12); the horizontal flange (21) is also provided with two positioning stands (24) capable of being sleeved into the recesses; and the top of each positioning stand is respectively provided with an elongated recess (25); and
a lining pot body (30), in which the lining pot body (30) is capable of being sleeved into the pot body base (20); and a top edge of the lining pot body (30) is provided with handles (31) which are respectively bridged into the elongated recess (25) and extended outwards; and
a pot cover configured to cover the pot body, including:
an outer cover (40), in which the outer cover (40) is a round convex structure provided with an recessed space (41) at the bottom, and is extended outwards and provided with a turnover arm (42) capable of being pivoted on the horizontal extension (22) of the pot body base (20);
a heat-insulating inner cover (50), in which the heat-insulating inner cover (50) is an inverted pan structure provided with an opening (51) on the top; and a bottom edge of the heat-insulating inner cover (50) is provided with a horizontal flange (52) capable of being fixed at a position close to a bottom edge on the inside of the outer cover (40);
a heating apparatus (60), in which the heating apparatus (60) is a circular heating source disposed at the bottom of the opening (51); and
a fan apparatus (70), in which the fan apparatus (70) includes a fan drive unit (71) disposed at a position close to the top of the recessed space (41); a first cooling fan (72) which is driven by the fan drive unit (71) and blows up is disposed above the fan drive unit (71); and a second cooling fan (73) which is coaxially driven and configured to cool the fan drive unit (71) and a hot-gas driven fan (74) which blows down the circular heating source, the second cooling fan (73) and the hot gas driven fan (74) are disposed below the fan drive unit (71);
a drive unit (23) accommodated into the auxiliary accommodating space (12) and being disposed at the bottom of the horizontal extension (22) and provided with a drive shaft (231) which horizontally runs through a side wall of the pot body base (20); an end portion of the drive shaft (231) is provided with an axially recessed nesting hole (232); a side wall of the lining pot body (30) is provided with a through hole (32) corresponding to an outer end of the drive shaft (231); and a rotating support (33) extended towards the center of the lining pot body (30) is disposed on a side wall facing the through hole (32).

2. The cooking pot according to claim 1, wherein the cooking pot further comprises linkage rods (81, 82) axially extending outwards and respectively disposed on the center at two axial ends of the rotating and rolling basket (80); and an end portion of one linkage rod (81) may be inserted into the nesting hole (232) of the drive shaft (231), and an end portion of the other linkage rod (81, 82) is bridged on the rotating support (33), so that the rotating and rolling basket (80) can be driven to rotate by the drive unit (23).

3. The cooking pot according to claim 2, wherein the rotating and rolling basket (80) is a cylindrical structure.

4. The cooking pot according to claim 2, wherein the rotating and rolling basket (80) is a long rectangular columnar structure.

5. The cooking pot according to claim 3 or 4, wherein an outer wall of the rotating and rolling basket (80) is a screen (83).

6. The cooking pot according to one of claims 3 to 5, wherein the outer wall of the rotating and rolling basket (80) is formed by a plurality of equally spaced strip rods (84).

7. The cooking pot according to one of claims 2 to 6, wherein the rotating and rolling basket (80) is an elongated rod (90) of which one end may be inserted into the nesting hole (232) of the drive shaft (231) and the other end may be bridged on the rotating support (33); and the elongated rod (90) is provided with a plurality of food retainers capable of moving on the elongated rod (90).

## Patentansprüche

1. Kochtopf mit:
einem rotierenden und rollenden Korb (80);
einem Topfkörper mit:
einem Topfkörpergehäuse (10), wobei das Topfkörpergehäuse (10) mit einem Hauptunterbringungsraum (11) versehen ist; der Hauptunterbringungsraum (11) ist konvex auf eine Seite hin ausgeweitet und ist mit einem Zusatzunterbringungsraum (12) ausgestattet; und die Oberkanten auf beiden Seiten des Topfkörpergehäuses (10) sind jeweils mit einer entsprechenden Aussparung (13) versehen;
einer Topfkörperbasis (20), wobei die Topfkörperbasis (20) ein Topfkörperaufbau ist, der in den Hauptunterbringungsraum (11) hineingesteckt werden kann; das obere Ende der Topfkörperbasis (20) ragt nach außen und ist mit einem horizontalen Flansch (21) versehen, der in der Lage ist, eine Oberkante des Hauptunterbringungsraums (11) abzudecken; der horizontale Flansch (21) ragt ferner horizontal und konvex nach außen und ist mit einer horizontalen Verlängerung (22) versehen, die in der Lage ist, den Zusatzunterbringungsraum (12) abzudecken; der horizontale Flansch (21) ist außerdem mit zwei Positioniergestellen (24) versehen, die in die Aussparungen hineingesteckt werden können; und die Oberseite jedes Positioniergestells ist jeweils mit einer verlängerten Aussparung (25) versehen; und
einem Auskleidetopfkörper (30), wobei der Auskleidetopfkörper (30) in die Topfkörperbasis hineingesteckt werden kann; und eine Oberkante des Auskleidetopfkörpers (30) mit Griffen (31) versehen ist, die jeweils in den verlängerten Aussparung (25) gesteckt sind und nach außen ragen beinhaltet; und
einem Topfdeckel, der geformt ist, dass er den Topfkörper abdeckt, mit:
einer Außenabdeckung (40), wobei die Außenabdeckung (40) eine runde konvexe Struktur aufweist, die mit einem eingelassenen Raum (41) am Boden versehen ist und nach außen ragt und mit einem Schwenkarm (42) versehen ist, der auf die horizontale Verlängerung (22) der Topfkörperbasis (20) geschwenkt werden kann;
einer wärmeisolierenden inneren Abdeckung (50), wobei die wärmeisolierende innere Abdeckung (50) eine umgedrehte Pfannenstruktur ist, die mit einer Öffnung (51) auf der Oberseite versehen ist; und eine Unterkante der wärmeisolierenden inneren Abdeckung (50) ist mit einem horizontalen Flansch (21) versehen, der an einer Position in der Nähe der Unterkante auf der Innenseite der Außenabdeckung (40) befestigt werden kann;
einer Heizvorrichtung (60), wobei die Heizvorrichtung (60) eine runde Heizquelle ist, die an der Unterseite der Öffnung (51) angebracht ist; und
einer Lüftervorrichtung (70), wobei die Lüftervorrichtung (70) eine Lüfterantriebseinheit (71), die an einer Position in der Nähe der Oberseite des eingelassenen Raums (41) angebracht ist; ein erstes Kühllüfterrad (72), das durch die Lüfterantriebseinheit (71) angetrieben wird und nach oben bläst und über der Lüfterantriebseinheit (71) angebracht ist; und ein zweites Kühllüfterrad (73), das koaxial angetrieben wird und konfiguriert ist, um die Lüfterantriebseinheit (71) zu kühlen und ein mit Heißgas angetriebener Lüfter (74), der die runde Heizquelle hinunterbläst umfasst,
das zweite Lüfterrad (73) und der mit Heißgas angetriebene Lüfter (74) sind unter der Lüfterantriebseinheit (71) angebracht;
einer Antriebseinheit (23), die im Zusatzunterbringungsraum (12) untergebracht ist und an der Unterseite der horizontalen Verlängerung (22) angebracht ist und mit einer Antriebswelle (231) versehen ist, die horizontal durch eine Seitenwand der Topfkörperbasis (20) verläuft; ein Endabschnitt der Antriebswelle (231) ist mit einem axial zurückgesetzten Aufnahmeloch (232) versehen; eine Seitenwand des Auskleidetopfkörpers (30) ist mit einem Durchgangsloch (32) versehen, das einem äußeren Ende der Antriebswelle (231) entspricht; und eine Drehauflage (33), die sich in die Mitte des Auskleidetopfkörpers (30) erstreckt, ist auf einer Seitenwand angebracht, die dem Durchgangsloch (32) zugewandt ist.

2. Der Kochtopf gemäß Anspruch 1, wobei der Kochtopf ferner Verbindungsstangen (81, 82) umfasst, die axial nach außen ragen und entsprechend auf der Mitte der beiden axialen Enden des rotierenden und rollenden Korbs (80) angebracht ist; und ein Endabschnitt der einen Verbindungsstange (81) kann in das Aufnahmeloch (232) der Antriebswelle (231) eingeführt werden, und ein Endabschnitt der anderen Verbindungsstange (82) ruht auf der Drehauflage (33), so dass der rotierende und rollende Korb (80) durch die Antriebseinheit (23) angetrieben werden kann.

3. Der Kochtopf gemäß Anspruch 2, wobei der rotierende und rollende Korb (80) einen zylindrischen Aufbau aufweist.

4. Der Kochtopf gemäß Anspruch 2, wobei der rotierende und rollende Korb (80) einen langen rechteckigen säulenförmigen Aufbau aufweist.

5. Der Kochtopf gemäß Anspruch 3 oder 4, wobei eine Außenwand des rotierenden und rollenden Korbs (80) ein grobes Sieb (83) ist.

6. Der Kochtopf gemäß einem der Ansprüche 3 bis 5, wobei die Außenwand des rotierenden und rollenden Korbs (80) aus einer Vielzahl von äquidistanten Leistenstäben (84) besteht.

7. Der Kochtopf gemäß einem der Ansprüche 2 bis 6, wobei der rotierende und rollende Korb (80) eine verlängerte Stange (90) ist, deren eines Ende in das Aufnahmeloch (232) der Antriebswelle (231) eingeführt werden kann und das andere Ende auf der Drehauflage (33) ruhen kann; und die verlängerte Stange (90) ist mit einer Vielzahl an Nahrungsmittelbehältern versehen, die sich auf der verlängerten Stange (90) bewegen können.

## Revendications

1. Marmite de cuisson, comprenant:
un panier tournant et roulant (80);
un corps de marmite, comprenant:
un carter de corps de marmite (10), dans lequel le carter de corps de marmite (10) est pourvu d'un espace de logement principal (11); l'espace de logement principal (11) est déployé de façon convexe en direction d'un côté et est pourvu d'un espace de logement auxiliaire (12); et des arêtes supérieures sur les deux côtés du carter de corps de marmite (10) sont respectivement pourvues d'un renfoncement (13) correspondant;
une base de corps de marmite (20), la base de corps de marmite (20) étant une structure de corps de marmite pouvant être chemisée dans l'espace de logement principal (11); le dessus de la base de corps de marmite (20) est déployé vers l'extérieur et pourvu d'un flasque horizontal (21) capable de recouvrir une arête supérieure de l'espace de logement principal (11); le flasque horizontal (21) est en outre déployé horizontalement et de façon convexe vers l'extérieur et pourvu d'un prolongement horizontal (22) capable de recouvrir l'espace de logement auxiliaire (12); le flasque horizontal (21) est également pourvu de deux socles de positionnement (24) capables d'être chemisés dans les renfoncements; et le dessus de chaque socle de positionnement est respectivement pourvu d'un renfoncement (25) allongé; et
un corps de marmite à revêtement (30), dans lequel le corps de marmite à revêtement (30) peut être chemisé dans la base de corps de marmite (20); et une arête supérieure du corps de marmite à revêtement (30) est pourvue de poignées (31) qui sont respectivement comblées dans le renfoncement allongé (25) et déployées vers l'extérieur; et
un couvercle de marmite configuré pour recouvrir le corps de marmite, comprenant:
un couvercle extérieur (40), dans lequel le couvercle extérieur (40) est une structure convexe ronde pourvue d'un espace renfoncé (41) sur le fond et est déployé vers l'extérieur et pourvu d'un bras tournant (42) pouvant pivoter sur l'extension (22) horizontale de la base de corps de marmite (20);
un couvercle intérieur (50) thermo-isolant, dans lequel le couvercle intérieur thermo-isolant (50) est une panstructure inversée pourvue d'une ouverture (51) sur le dessus; et une arête inférieure du couvercle intérieur thermo-isolant (50) est pourvue d'un flasque horizontal (21) pouvant être fixé dans une position à proximité d'un bord inférieur à l'intérieur du couvercle extérieur (40);
un appareil de chauffage (60), dans lequel l'appareil de chauffage (60) est une source de chauffage circulaire disposée au fond de l'ouverture (51); et
un appareil de ventilation (70), dans lequel l'appareil de ventilation (70) comprend une unité d'entraînement de ventilateur (71) disposée dans une position située à proximité du dessus de l'espace renfoncé (41); un premier ventilateur de refroidissement (72) qui est entraîné par l'unité d'entraînement de ventilateur (71) et souffle vers le haut est disposé au-dessus de l'unité d'entraînement de ventilateur (71); et un second ventilateur de refroidissement (73) qui est entraîné coaxialement et est configuré pour refroidir l'unité d'entraînement de ventilateur (71) et un ventilateur entraîné par gaz chaud (74) qui souffle vers le bas la source de chauffage circulaire, le second ventilateur de refroidissement (73) et le ventilateur entraîné par gaz chaud (74) sont disposés en dessous de l'unité d'entraînement de ventilateur (71);
une unité d'entraînement (23) logée dans l'espace de logement auxiliaire (12) est disposée au fond du prolongement horizontal (22) et pourvue d'un arbre d'entraînement (231) qui tourne horizontalement à travers une paroi latérale de la base de corps de marmite (20); une partie d'extrémité de l'arbre d'entraînement (231) est pourvue d'un trou de logement (232) à renfoncement axial ; une paroi latérale du corps de marmite à revêtement (30) est pourvue d'un trou traversant (32) correspondant à une extrémité extérieure de l'arbre d'entraînement (231); et un support tournant (33) déployé en direction du centre du corps de marmite à revêtement (30) est disposé sur une paroi latérale faisant face au trou traversant (32).

2. Marmite de cuisson selon la revendication 1, dans lequel la marmite de cuisson comprend en outre des tiges de liaison (81, 82) déployée axialement vers l'extérieur est respectivement disposée au centre aux deux extrémité axiales du panier tournant et roulant (80); et une partie d'extrémité d'une tige de liaison (81) peut être insérée dans le trou de logement (232) de l'arbre d'entraînement (231) et une partie d'extrémité de l'autre tige de liaison (82) est comblée sur le support tournant (33), de sorte que le panier tournant et roulant (80) puisse être entraîné en rotation par l'unité d'entraînement (23).

3. Marmite de cuisson selon la revendication 2, dans lequel le panier tournant et roulant (80) est une structure cylindrique.

4. Marmite de cuisson selon la revendication 2, dans lequel le panier tournant et roulant (80) est une structure colonnaire rectangulaire longue.

5. Marmite de cuisson selon la revendication 3 ou 4, dans lequel une paroi extérieure du panier tournant et roulant (80) est un tamis (83).

6. Marmite de cuisson selon l'une quelconque des revendications 3 à 5, dans lequel la paroi extérieure du panier tournant et roulant (80) est formée par une pluralité de tiges (84) équidistantes.

7. Marmite de cuisson selon l'une quelconque des revendications 2 à 6, dans lequel le panier tournant et roulant (80) est une tige (90) allongée dont une extrémité peut être insérée dans le trou de logement (232) de l'arbre d'entraînement (231) et l'autre extrémité peut être comblée sur le support tournant (33); et la tige (90) allongée est pourvue d'une pluralité de systèmes de retenue de nourriture pouvant se déplacer sur la tige (90) allongée.
